# EUROPÄISCHE PATENTANMELDUNG

(11) **EP 0 833 458 A2**
(43) Veröffentlichungstag der Anmeldung: **01.04.1998**
(21) Anmeldenummer: 97113607.2
(22) Anmeldetag: 06.08.1997
(51) Int. Cl.: H04B 3/23

(54) **Verfahren und Anordnung zur Echokompensation**

(30) Priorität: 26.09.1996 DE 19639703
(71) Anmelder: SIEMENS AKTIENGESELLSCHAFT, 80333 München (DE)
(72) Erfinder: von Pfeil, Dirsko, Ing., 82069 Hohenschäftlarn (DE); Waretzi, Erhard, Dipl.-Ing., 85540 Haar (DE)

(57) **Zusammenfassung**

Verfahren zur Echokompensation, bei dem durch Korrelation eines Sendesignals s(t) und eines Fehlersignals e(t) Filterkoeffizienten (C0, C1, ... ) gewonnenen werden, die ein Korrektursignal ke(t) bestimmen, das zur Eliminierung eines störenden Signalanteils ec(t) von dem aus dem Sprachsignal und dem Echosignal ec(t) gebildeten Summensignal es(t) subtrahiert wird und in derselben Weise Hifskoeffizienten (HC0, HC1; ... ) ermittelt werden, deren Betrag das Produkt aus dem Sendesignal s(t) und dem Fehlersignal e(t) steuert und so den zeitlichen Verlauf der Filterkoeffizienten (C0, C1, ... ) bestimmt.

## Beschreibung

Die Erfindung betrifft ein Verfahren und eine Anordnung zur Echokompensation mit einem Filter, dessen Koeffizienten in Abhängigkeit von einem Echosignal geregelt werden.

Echokompensatoren werden bei Signalverbindungen, insbesondere Sprachverbindungen, mit langer Laufzeit verwendet. Ihre Aufgabe ist es, durch Sendesignale verursachte als Echosignale bezeichnete Störsignale zu kompensieren, die durch eine nicht vollständige Entkopplung der Übertragungswege entstehen, beispielsweise in der Gabelschaltung und an Reflexionsstellen des Übertragers einer angeschlossenen Zweidrahtleitung.

Im Echokompensator wird aus dem Sendesignal das Echosignal mittels einer Filteranordnung nachgebildet und von dem aus Empfangssignal und Echosignal zusammengesetzten Empfangssignal subtrahiert.
Bei höheren Anforderungen an den Echokompensator werden adaptive digitale Filter, häufig Transversalfilter (FIR-Filter), eingesetzt, deren Koeffizienten einstellbar sind. Ein solcher Echokompensator ist beispielsweise in den "Kleinheubacher Berichten" 26, 1983 des fernmeldetechnischen Zentralamtes in Darmstadt, Seiten 427 - 435 beschrieben.

Echokompensatoren sollen sich einerseits schnell und genau entsprechend dem Echosignal einstellen und andererseits ihre Einstellung stabil halten, wenn bei gleichzeitigem Gegensprechen Sprachsignale das Echosignal überlagern. Probleme bereiten auch starke Umweltgeräusche, die ebenfalls dem Echosignal überlagert sind. Der Echokompensator soll sich trotzdem einstellen können. Für eine schnelle Einstellung müssen die Filterkoeffizienten sich rasch, d.h. mit großer Schrittweite ändern, für eine genaue und geräuschunempfindliche Einstellung ist aber ein feinstufiger Filterabgleich notwendig.

Das Problem, eine rasche Kompensation des Echosignals mit einer geräuschunempfindlichen Einstellung zu kombinieren, wird durch das im unabhängigen Anspruch 1 angegebene Verfahren und einer in einem weiteren unabhängigen Anspruch angegebene Schaltungsanordnung gelöst.

Vorteilhafte Weiterbildungen sind in abhängigen Ansprüchen angegeben.

Die Gewinnung und Verwendung von Hilfskoeffizienten zur Steuerung des Regelverhaltens erweist sich als besonders vorteilhaft. Die Hilfskoeffizienten werden wie die Filterkoeffizienten aus denselben Signalen ermittelt, jedoch werden die Hilfskoeffizienten laufend verkleinert, so daß sie nach erfolgter Korrelation Werte erreichen, die um den Wert Null schwanken.

Vorteilhaft ist es, den Hilfskoeffizienten jeweils um einen konstanten Bruchteil ihrer aktuallen Größe zu verringern. Hierdurch ergibt sich zunächst eine rasche, dann eine langsamer werdende VerKeinerung. Zweckmäßig ist auch weiterhin die Verwendung einer Sprecherkennung, die bei Gegensprechen die Korrelatoren sprerrt.

Der Hilfskoeffizient kann auch, entsprechend dem gewünschten Regelverhalten, stets um einen konstanten Betrag oder nach einem vorgegebenen Algorithmus verringert werden

Die Erfindung wird anhand eines Ausführungsbeispiels näher erläutert.

Es zeigen
- Figur 1: ein Prinzipschaltbild des Echokompensators und.
- Figur 2: ein Zeitdiagramm.

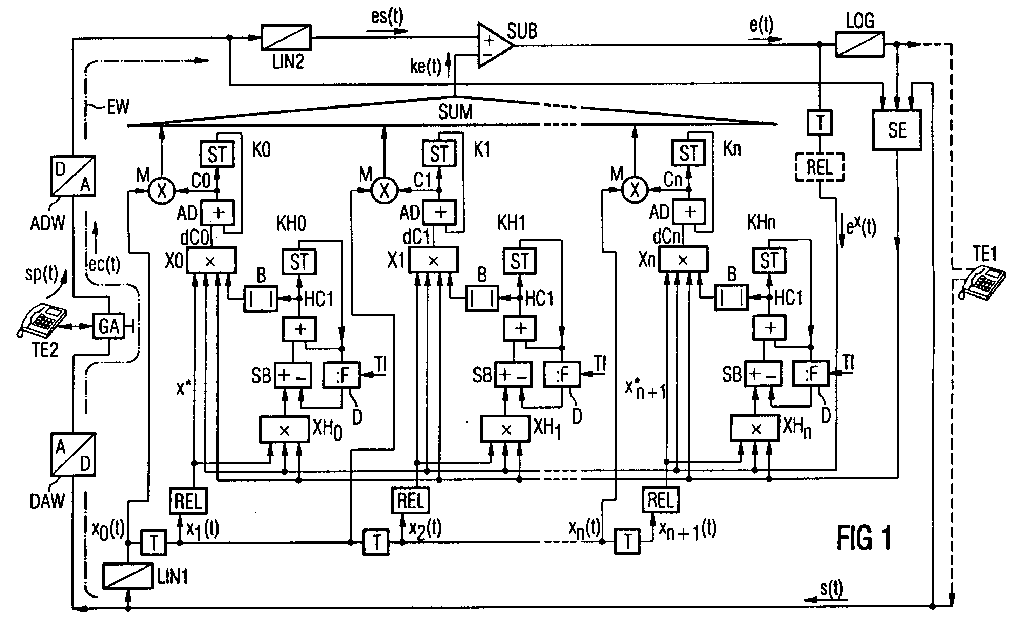

Der in der Figur 1 dargestellte Echokompensator ist für PCM-codierte Signale ausgeführt. Die Fernsprechverbindung zwischen einem ersten Teilnehmer TE1 und einem zweiten Teilnehmer TE2 weist eine derart lange Laufzeit auf, daß das vom ersten Teilnehmer TE1 erzeugte Sendesignal s(t) sich aufgrund der nicht ausreichenden Entkopplung von Sende- und Empfangssignalweg über den Echoweg EW als Echosignal ec(t) störend bemerkbar macht. Die lange Laufzeit kann durch die Strecke, beispielsweise Satellitenverbindungen oder sehr lange Kabel bedingt sein, aber auch durch Codierungen der Signale, die beispielsweise der Bitratenreduktion oder der Fehlerkorrektur dienen. Die störenden Echosignale entstehen hauptsächlich in der Gabelschaltung GA des zweiten Teilnehmers TE2, dem das Signal s(t) als analoges Signale über einen Digital-Analog-Wandler DAW zugeführt werden. Das analoge Echosignal wird dem Sprachsignal sp(t) überlagert und mit diesem in ein digitales Summensignal es(t) umgesetzt.

Der Echokompensator weist einen durch Register T gebildete Laufzeitkette aus, die zusammen mit den Multiplizierern M und dem Summierer SUM ein Transversalfilter bildet. Diesem Filter wird das in lineare Signalwerte x₀(t), x₁(t), x₂(t), ..., xₙ(t) umgesetztes Sendesignal s(t) zugeführt. Die Register arbeiten mit dem Takt der gesendeten Datenwörter bzw. Abtastwerte.

Da komprimierte PCM-codierte Daten übertragen werden, ist es zweckmäßig, diese zunächst in lineare Daten rückumzusetzen. Dies erfolgt in einem Linearisierer LIN1. Ein entsprechender Linearisierer LIN2 und Logarithmierer LOG werden in der anderen Übertragungsrichtung verwendet.

Den Korrelatoren K0 bis Kn sind an sich bekannte Relativiereinrichtungen REL vorgeschaltet, die die aktuellen Amplitudenwerte auf die vorhergehenden Amplitudenwerte (Mittel-, Effektiv- oder Spitzenwerte) beziehen. Es erfolgt gewissermaßen eine Normierung die zu den relativierten Signalwerten x*₀,..., x*ₙ₊₁ führt.

Für die Betrachtung der Wirkungsweise wird zunächst angenommen, daß kein Gegensprechen erfolgt.
Der Echoentzerrer erzeugt mit Hilfe des Transversalfilters ein Korrektursignal ke(t), das dem Echosignal ec(t) möglichst genau nachgebildet ist und von diesem subtrahiert wird. Das verbleibende Fehlersignal (Restechosignal) e(t) steuert die Korrelatoren, die jeweils aus einem einfachen Multiplizierer X0, X1 ... und einer aus einem Speicher ST und einem Addierer AD gebildeten Summationsschaltung bestehen.

Jeder Korrelator ermittelt einen Filterkoeffizienten C0, C1, ... mit dem das Sendesignal s(t) - nach der Umsetzung und unterschiedlichen Verzögerung in den Registern des Transversalfilters - in einem der Multiplzierer M multipliziert wird. Häufig ist noch eine Anpassung der Größenordnungen des aufsummierten Wertes und dem benötigten Filterkoeffizienten erforderlich, die durch eine zwischen dem Korrelator und dem zugeordneten Multiplizierer M eingefügete Schaltung bzw. durch Verschiebung der Binärstellen vorgenommen wird. Die von den Multiplizierern abgegebenen Signalanteile werden in einem Summierer SUM zu dem Korrektursignal ke(t) zusammengefaßt.

Jedem Korrelator ist ein Hilfskorrelator KH0 bis KHn zugeordnet. Dessen Multiplizierer XH0, XH1, ... werden dieselben Eingangswerte wie dem zugeordneten Korrelator zugeführt, jedoch wird der gespeicherte Hilfskoeffizient regelmäßig mit Auftreten eines Taktimpulses TI (Zeitabstand beispielsweise 4ms) verringert. Diese Funktion wird jeweils durch einen Dividierer D und einen Subtrahierer SUB realisiert. Bei einem fehlenden oder/und unkorrelierten Signal wird der Hilfskoeffizient daher in Richtung Null verändert. Von dem Hilfskoeffizienten wird in einem Betragbilder B der Betrag des Hilfskoeffizienten HC0, HC1, ... gebildet, der den jeweils zugeordneten Multiplizierer X0, X1, ... des zugehörigen Korrelators K0, K1, ... in der Weise steuert, daß bei einem kleinen Betrag des Hilfskoeffizienten HC0, HC1, .... das Produkt dC0, dC1, ... des relativierten Sendesignals x*₀(t), ..., x*ₙ(t) und des Fehlersignals e(t) zusätzlich einem kleinen Faktor multipliziert wird, während bei großen Werten des Hilfkoeffizienten ein entsprechend größerer Faktor zum Tragen kommt. Hierdurch ist das jeweilige Korrelationsprodukt dC0, dC1, ... stark von dem Hilfskoeffizienten abhängig.

Zu ergänzen ist noch, daß es ausreichend sein kann, nur das Vorzeichenbit des Fehlersignals und die höchstwertigen Bits des Hilfskoeffizienten zu verwenden. Ebenso ist es häufig ausreichend, z. B. die drei höchstwertigen Bits des relativierten Signals (dies sind drei höchstwertigen sich ändernden Bits des linearen Signals) zu verwenden. Ebenso wie das relativierte Sendesignal x*(t) kann auch ein relativiertes Fehlersignal (Restechosignal) e*(t) verwendet werden, das Lautstärkeschwankungen kompensiert.

Durch den Regelprozeß werden alle Filterkoeffzizienten so eingestellt, daß sich ein minimales Fehlersignal e(t) ergibt. Der Regelvorgang wird möglicht nur dann durchgeführt, wenn kein Gegensprechen erfolgt.

Beim Gegensprechen wird ein Sprachsignal sp(t) des zweiten Teilnehmers zum ersten Teilnehmer TE1 übertragen, dem das unerwünschte Echosignal ec(t) überlagert ist. Anstelle des Echosignals wird das Summensignal es(t) am Sendeweg-Eingang des zweiten Teilnehmers dem Subtrahierer SUB zugeführt.

Durch das Gegensprechen wird der Regelvorgang erschwert. Eine Spracherkennung SE sorgt daher dafür, daß der Regelvorgang unterbrochen wird, wenn bestimmte Bedingungen erfüllt sind, die auf Gegensprechen schließen lassen, beispielsweise wenn das Summensignal es(t) größer als das Sendesignal s(t) des ersten Teilnehmers ist.

Das Prinzipschaltbild kann schaltungsmäßig vereinfacht werden, indem Teile der Multiplizierer der Korrelatoren und Hilfskorrelatoren gemeinsam verwendet werden oder als Teile einer Recheneinheit ausgeführt werden.

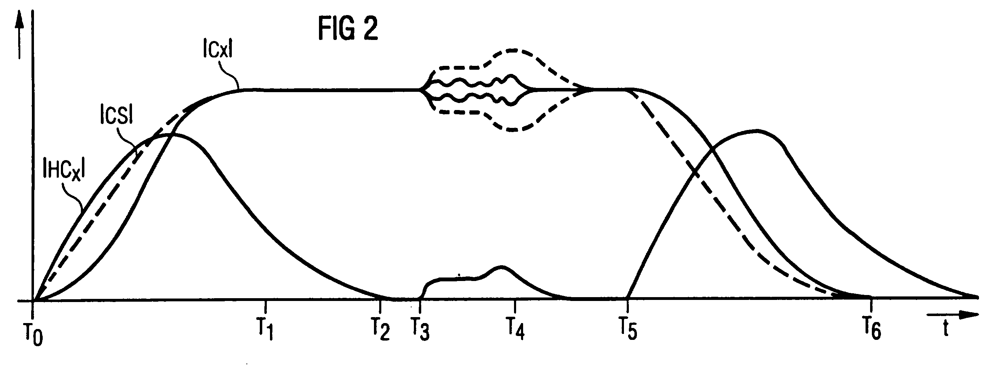

In Figur 2 ist der prinzipielle zeitliche Verlauf eines der Filterkoeffizienten Cₓ (x = 0, 1, 2, ...) und eines zugehörigen Hilfskoeffizienten HCₓ dargestellt. Es wird davon ausgegangen, das zum Zeitpunkt T₀ die Koeffizienten Null sind und korrelierte Signale anliegen.
Ist der Betrag des Hilfkoeffizienten noch gering, so wird der Filterkoeffizient Kₓ anfangs trotzdem nur sehr langsam ansteigen. Die Funktion CS zeigt zum Vergleich den Anstieg des Filterkoeffizienten eines herkömmlichen Kompensators ohne die Beaufschlagung mit dem Hilfskoeffizienten. Steigt dann der Betrag des Hilfskoeffizienten aufgrund der Korrelation zwischen Sendesignal und Echo bzw. Fehlersignal stark an, nimmt die Schrittweite des Filterkoeffizient immer mehr zu, bis der Hilfskoeffizient gegen Ende des Abgleichvorganges wieder kleiner wird, weil auch das Fehlersignal kleiner geworden ist und die periodische Verminderung überwiegt. Damit sinkt auch die Änderungsgeschwindigkeit des Filterkoeffizienten zusätzlich, so daß ein sehr stabiler und genauer Abgleich erzielt wird. Der Regelvorgang ist zum Zeitpunkt T1 beendet. Das verbleibende Fehlersignal ist nicht korreliert oder weist eine äußerst geringe Amplitude auf. Da der Hilfskoeffizient nun fortlaufend weiter verringert wird, sinkt sein Wert, bis er zum Zeitpunkt T₂ Null wird.

In dem Ausführungsbeispiel erfolgt die Verkleinerung des Hilskoeffizientendies, indem sein aktueller Wert durch einen konstanten Faktor F (z.B. 64) dividiert und in einem Subtrahierer SUB vom aktuellen Wert subtrahiert wird. Je nach gewünschtem Verlauf des Filterkoeffizienten, kann auch der aktuelle Wert um konstante Beträge reduziert werden usw. Auch kann die Funktion umgeschaltet werden oder durch Schwellwerte auf bestimmte Phasen des Regelvorganges beschränkt werden.

Durch eine geeignete Dimensionierung kann auch der 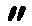 Umkehrpunkt" für das Maximum der Hilfskoeffizienten gegen Ende des Ausgleichsvorgangs festgelegt werden.

Ist der Wert des Hilfskoeffizienten HCₓ wieder sehr gering geworden, verhindert dies erneut eine rasche Änderung des Filterkoeffizienten.
Hier zeigen sich die großen Vorteile dieser Schaltung. Wenn beispielsweise das Gegensprechen des zweiten Teilnehmers TE2 zwischen den Zeitpunkten T₃ und T₄ noch nicht erkannt wurde, was zu einer Unterbrechung des Regelvorganges geführt hätte, können sich durch zufällige Korrelation zwar die Hifskoeffizienten rasch ändern, sie werden aber keine größeren Werte erreichen, da störenden Signalanteile nicht mit dem Sendesignal s(t) korreliert sind und korrelierte Signale die Voraussetzung für ein stärkeres Anwachsen der Hilfskoeffizienten sind. Kleine Hilfskoeffizienten bedeuten aber eine verlangsamte Koeffizientenregelung: es kommt daher nur zu kleinen Änderungen der Filterkoeffizienten Cₓ (x = 0, 1, 2, ...). Das Regelverhalten ist äußerst stabil.

Auch wenn sich der Teilnehmer TE2 ohne zu sprechen in einer lauten Umgebung befindet, ist es günstig, daß der Regelvorgang mit kleiner Schrittweite erfolgt, so daß sich der Kompensator langsam einstellen kann ohne daß zufälligen Korrelationen den Regelvorgang unstabil machen.

Zum Zeitpunkt T₅ ändern sich die Verhältnisse auf der Übertragungsstrecke. Es erfolgt ein neuer Regelvorgang, der zum Zeitpunkt T₆ abgeschlossen ist.

Die in Figur 2 dargestellte den Verlauf eines der Filterkoeffizienten wiedergebenden Funktion kann selbstverständlich den Erfordernissen angepaßt werden. Die Schaltung kann so dimensioniert werden, daß ein Endwert schneller erreicht wird. Trotzdem erfolgt nach Verringerung des Hilfskoeffizienten eine genaue Regelung, da die Änderungen des Filterkoeffizienten wieder geringer werden. Hierdurch wird auch die Schaltung wieder unempfindlich gegen Störsignale.

Unter optimalen Bedingungen erfolgt bei richtiger Dimensionierung durch das bekannte Verfahren eine etwa gleichschnelle Kompensation wie bei dem erfindungsgemäßen Verfahren. Bei problematischen Bedingungen wie störenden Geräuschen oder Gegensprechen ist das erfindungsgemäßen Verfahren aufgrund der größeren Stabilität aber weit überlegen.

## Patentansprüche

1. Verfahren zur Echokompensation, bei dem durch Korrelation eines Sendesignals s(t) und eines Fehlersignals e(t) Filterkoeffizienten (C0, C1, ... ) gewonnenen werden, die ein Korrektursignal ke(t) bestimmen, das zur Eliminierung eines störenden Signalanteils e(t) von dem Empfangssignal em(t) subtrahiert wird,
**dadurch gekennzeichnet**,
daß in derselben Weise Hifskoeffizienten (HC0, HC1; ... ) ermittelt werden, deren Betrag das die Größe des Produkts aus dem Sendesignal s(t) und dem Fehlersignal e(t) steuert, und
daß der Wert der Hilfskoeffizienten (HC0, HC1; ... ) fortlaufend verringert wird.

2. Verfahren zur Echokompensation,
**dadurch gekennzeichnet**,
daß fortlaufend ein konstanter Bruchteil des Wertes des Hifskoeffizienten (HC0, HC1; ... ) subtrahiert wird.

3. Verfahren zur Echokompensation,
**dadurch gekennzeichnet**,
daß fortlaufend ein konstanter Betrag vom Betrag des Hifskoeffizienten (HC0, HC1; ... ) subtrahiert wird.

4. Verfahren zur Echokompensation,
**dadurch gekennzeichnet**,
daß zur Ermittung der Filterkoeffizienten (C0, C1, ... ) und Hilfskoeffizienten (HC0, HC1; ... ) nur das Vorzeichenbit des Fehlersignals e(t) verwendet wird.

5. Verfahren zur Echokompensation,
**dadurch gekennzeichnet**,
daß zur Ermittung der Filterkoeffizienten (C0, C1, ... ) und Hilfskoeffizienten (HC0, HC1; ... ) ein relativiertes Fehlersignal e*(t) verwendet wird, das die unterschiedlichen Amplituden des Fehlersignals e(t) zumindest weitgehend ausgleicht.

6. Verfahren zur Echokompensation nach einem der vorhergehenden Ansprüche,
**dadurch gekennzeichnet**,
daß zur Ermittlung der der Filterkoeffizienten (C0, C1, ... ) und Hilfskoeffizienten (HC0, HC1; ... ) ein relativiertes Sendesignal (x*₀(t), ..., x*ₙ(t)) verwendet wird, das die unterschiedlichen Amplituden des Sendesignals zumindest weitgehend ausgleicht.

7. Anordnung zur Echokompensation mit einer Filteranordnung (T, M, SUM) zur Erzeugung eines Kompensationssignals ke(t) aus dem Sendesignal s(t) und Korrelatoren (K0, K1, K2, ...) zur Einstellung der Filterkoeffizienten (C0, C1, C2, ...) sowie einer Subtraktionseinrichtung (SUB), der zur Eliminierung des störenden Echosignals es(t) das gewonnene Kompensationssignal ke(t) zugeführt wird,
**dadurch gekennzeichnet**,
daß den Korrelatoren (K0, K1, K2, ...) jeweils ein Hilfskorrelator (KH0, KH1, KH2, ...) zugeordnet ist, dem wie dem Korrelator ebenfalls das Sendesignal (s(t) bzw. x₀(t), x₁(t), x₂(t), ..., xₙ(t)) und ein Fehlersignal e(t) zugeführt wird, aus denen Hilfskoeffizienten (HC0, HC1, ... ) ermittelt werden, deren Betrag schrittweise verkleinert wird, und
daß die Korrelatoren (K0, K1, K2, ...) derart ausgebildet sind, daß das aus den Eingangssignalen gebildete Produkt in seinem Wert von den Hilfskorrelatoren (KH0, KH1, KH2, ...) mitbestimmt wird.

8. Anordnung zur Echokompensation nach Anspruch 7
**dadurch gekennzeichnet**,
daß ein Signalkonverter (LIN1) vorgesehen ist, der ein PCM-codiertes Sendesignal s(t) in ein linear codiertes Sendesignal x₀(t), x₁(t), x₂(t), ..., xₙ(t) umsetzt.

9. Anordnung zur Echokompensation nach Anspruch 7 oder 8,
**dadurch gekennzeichnet**,
daß den Korrelatoren (K0, K1, K2, ...) und Hilfskorrelatoren (KH0, KH1, KH2, ...) eine Relativierungseinrichtung (REL) vorgeschaltet ist, die die Amplituden von in der Lautstärke schwankenden unterschiedlichen Sendesignalen s(t) zumindest weitgehend ausgleicht.

10. Anordnung zur Echokompensation
**dadurch gekennzeichnet**,
daß der Hilfskorrelator (KH0, KH1, KH2, ...) einen Dividierer (D) enthält, der den gespeicherten Wert des Hilfskoeffizienten (HC0, HC1, ... ) durch einen Faktor >1 dividiert, und einen Subtrahierer (SUB) enthält, der dem Speicher (ST) des Korrelators (KH0, KH1, KH2, ...) vorgeschaltet ist.
